# EUROPEAN PATENT SPECIFICATION

(11) **EP 3 292 746 B1**
(45) Date of publication and mention of the grant of the patent: **31.07.2019**
(21) Application number: 16187908.5
(22) Date of filing: 08.09.2016
(51) Int. Cl.: A01B 71/04

(54) **HUB ASSEMBLY FOR AN AGRICULTURAL IMPLEMENT AND ASSOCIATED AGRICULTURAL IMPLEMENT**
NABENANORDNUNG FÜR EINE LANDWIRTSCHAFTLICHE VORRICHTUNG UND ZUGEHÖRIGE LANDWIRTSCHAFTLICHE VORRICHTUNG
ENSEMBLE DE MOYEU POUR UN INSTRUMENT AGRICOLE ET MACHINE AGRICOLE ASSOCIÉE

(43) Date of publication of application: 14.03.2018
(73) Proprietor: SNR Wälzlager GmbH, 40699 Erkrath (DE)
(72) Inventor: KOOP, Jakob, 32791 Lage (DE); WENZEL, Henning, 33615 Bielefeld (DE); WOELM, Frank, 32051 Herford (DE)
(74) Representative: Alatis

(56) References cited:
- EP-A1- 2 881 261
- EP-A1- 2 946 648

## Description

### TECHNICAL FIELD OF THE INVENTION

The present invention relates to a hub assembly for an agricultural implement, more specifically for an implement that rolls on the ground such as a disc harrow. It also relates to an agricultural implement provided with such a hub assembly.

### BACKGROUND ART

Independent disc stubble cultivators and soil tillage machines are commonly equipped with several dozens of discs, each supported by an independent hub assembly. Usually, each hub assembly comprises a hub housing provided with a through hole defining cylindrical cavity and a shoulder protruding radially inwards with respect to the through hole for receiving an outer race ring, which is press-fitted into the cylindrical cavity and abuts against the shoulder. The hub housing is provided with a flange protruding radially outwardly at one end of the hub housing for securing a disc harrow. A spacer may be pinched axially between the disc harrow and the outer race ring to locate the outer race ring in the axial direction. The spacer is a closed ring press-fitted into the cavity. As a result, the mounting process of the hub assembly necessitates tools for assembling the spacer with press-fit. A hub assembly is for instance known from EP2946648A.

### SUMMARY OF THE INVENTION

The invention aims to provide improved hub assembly which is easy to mount.

According to a first aspect of the invention, there is provided a hub assembly for an agricultural implement, comprising:
- a hub housing having an outer wall defining a mounting flange and an inner wall defining a through cavity;
- an outer race ring unit comprising one or more outer race rings press-fitted into the through cavity, the outer race ring unit defining a reference axis of the hub assembly and having a first axial end bearing against a shoulder of the inner wall of the hub housing inside the through cavity, and
- a semi-flexible open spacer ring radially elastically retained against the inner wall in the through cavity, the semi-flexible open spacer ring having an inner axial end bearing against a second axial end of the outer race ring unit opposite the first axial end and an outer axial end which is flush with, or protrudes from, a planar face of the mounting flange.

The force necessary to mount the semi-flexible open spacer ring into the through cavity is greatly reduced. The installation of the semi-flexible open spacer ring can be done by hand within seconds.

Preferably, wherein the inner wall has a cylindrical portion, the outer race ring unit is press-fitted into the cylindrical portion of the inner wall and the semi-flexible open spacer ring is radially elastically retained against the cylindrical portion of the inner wall. The semi-flexible open spacer ring is not retained in a groove of the inner wall.

According to one embodiment, the semi-flexible open spacer ring has a cylindrical outer face in contact with the inner wall of the hub housing. Preferably, the semi-flexible open spacer ring has quadrangular cross-section.

According to one embodiment, the mounting flange has one or more through holes parallel to the reference axis. The through holes are used to fasten the agricultural implement to the hub housing by means of mechanical fasteners such as bolts, screws, rivets or the like. The through holes can be cylindrical, with or without inner threads.

According to one embodiment, the mounting flange is provided with an annular groove opened axially for receiving an annular seal. The annular seal seals the interface between the flange of the hub housing and the agricultural implement.

According to one embodiment, the hub assembly is further provided with an inner race ring unit comprising one or more inner race rings, and one or more rows of rolling bodies between the inner race ring unit and the outer race ring unit, for guiding a rotation movement of the outer race ring unit relative to the inner race ring unit about the reference axis of the hub assembly. The rolling bodies can be balls, cylindrical or tapered rollers, and more generally any kind of rolling bodies that has an external surface of revolution.

According to a another aspect of the invention, there is provided an agricultural implement assembly comprising the hub assembly as described hereinbefore and an agricultural rotary implement, in particular a disc harrow, fixed to the flange of the hub housing, wherein the rotary implement bears axially against the outer end of the semi-flexible open spacer ring. Thus, the outer race ring unit is maintained axially between the shoulder at one axial end and the spacer ring and agricultural implement at the other.

According to an embodiment, the agricultural implement further comprises a support pin having an inner section inside the through cavity of the hub housing and a protruding section that protrudes axially outside the hub housing in a direction opposite the planar face, wherein the inner race ring unit is press-fitted onto the inner section of the support pin and bears axially against a shoulder of the support pin at one end of the inner section of the support pin opposite the protruding section.

According to one embodiment, the agricultural implement further comprises a support arm to which the support pin is fastened. Advantageously, the support arm bears axially directly or indirectly against the inner race ring unit. A spacer ring and/or a washer can be fitted on the support pin between the inner race ring unit and the support arm. The inner race ring unit is rigidly maintained axially between the shoulder of the support pin and the support arm.

The support pin can be fixed by any means to the support arm, preferably by releasable mechanical fasteners such as screws or bolts, to allow maintenance or replacement of the agricultural implement or of the hub assembly. Preferably, the protruding section of the support pin extends through a through hole of the support arm. A nut can be screwed onto a threaded end of the protruding end section of the support pin.

According to a preferred embodiment, the support arm is part of a harrow frame.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- figure 1 is an isometric view of a hub assembly for an agricultural implement according to an embodiment of the invention;
- figure 2 is a radial section of an agricultural implement provided with the hub assembly of figure 1.

Corresponding reference numerals refer to the same or corresponding parts in each of the figures.

### DETAILED DESCRIPTION OF PREFERRED EMBODIMENTS

With reference to the figures, a hub assembly **10** for an agricultural implement **12,** e.g. a disc harrow, comprises a hub housing **14** having an outer wall **16** defining a mounting flange **18** and an inner wall **20** defining a through cavity **22.**

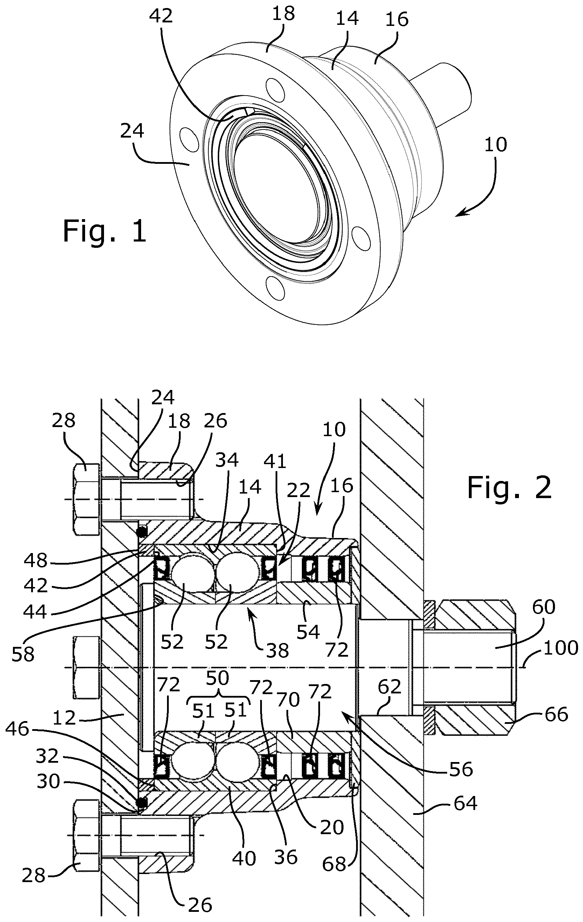

The mounting flange **18** is preferably annular and has a planar face **24** that extends in a plane perpendicular to a reference axis **100** of the hub assembly **10.** The mounting flange **18** has one or more threaded through holes **26** parallel to the reference axis **100** for mounting the agricultural implement **12** by means of screws or other mechanical fasteners **28,** as illustrated in Figure **2****.** The mounting flange **18** may also be provided with an annular groove **30** opened axially for receiving an annular seal **32** that seals the interface between the mounting flange **18** and the agricultural implement **12.**

The inner wall **20** of the hub housing **14** has a cylindrical portion **34** that extends from the planar face **24** of the flange **18** to a shoulder **36** inside the through cavity **22.**

A rolling bearing **38** is received inside the through cavity **22** to allow rotation of the hub housing **14** and implement **12** about the reference axis **100.** The rolling bearing **38** comprises an outer race ring unit **40** that consists of one or more outer race rings, which is press-fitted into the cylindrical portion **34** of the inner wall **20,** such that a first axial end **41** of the outer race ring unit **40** bears against the shoulder **36** of the inner wall **20** of the hub housing **14** inside the through cavity **20.**

The hub assembly **10** further comprises a semi-flexible open spacer ring **42** of quadrangular cross-section, with a cylindrical outer facewhich has a larger nominal diameter than the cylindrical portion **34** of the inner wall **20** and is elastically retained against the cylindrical portion **34** of the inner wall **20** in the through cavity **20.** The spacer ring **42** has an inner axial end **44** that bears against a second axial end **46** of the outer race ring unit **42** opposite the first axial end **41,** and an outer axial end **48** which is flush with, or slightly protrudes from, the planar face **24** of the mounting flange **18.** The agricultural implement **12** fixed to the flange **18** of the hub housing **14** bears axially against the outer end **48** of the open spacer ring **42** to axially maintain the position of the open spacer ring **42** and of the outer race ring unit **40.** As illustrated in figure **1****,** the open spacer ring **42** extends in the circumferential direction over an angle of more than 270°, preferably more 290°, and in one preferred embodiment more than 300°, and can easily be deformed elastically to temporally reduce its diameter, insert it into the through cavity **22** and snap it into place.

The rolling bearing **38** further comprises an inner race ring unit **50** comprising one or more inner race rings **51,** and one or more rows of rolling bodies **52** between the inner race ring unit **50** and the outer race ring unit **40,** for guiding a rotation movement of the outer race ring unit **40** relative to the inner race ring unit **50** about the reference axis **100** of the hub assembly **10.**

The inner race ring unit **50** is press-fitted onto an inner section **54** of a support pin **56** and bears axially against a shoulder **58** at one end of the inner section **54** of the support pin **56.** The support pin **56** has a protruding section **60** that protrudes axially outside the hub housing **14** in a direction opposite the planar face **24** and extends through a through hole **62** of a support arm **64,** which can be a fixed or articulated part of an implement frame, e.g. a harrow frame. A nut **66** is screwed onto a threaded end of the protruding end section **60** of the support pin **56** to fasten the support pin **60** to the support arm **64.** A washer **68** and a spacer ring **70** are mounted on the support pin **56** between the support arm **64** and the inner race ring unit **50.** The washer **68** substantially closes the open space between the support pin **56** and the hub housing **14,** without contacting the hub housing **14.** Cassette seals **72** are mounted between the spacer ring **70** and the hub housing **14** and between the outer race ring unit **40** and inner race ring unit **50.**

## Claims

1. A hub assembly (10) for an agricultural implement (12), comprising:
- a hub housing (14) having an outer wall (16) defining a mounting flange (18) and an inner wall (20) defining a through cavity (22);
- an outer race ring unit (40) comprising one or more outer race rings press-fitted into the through cavity (22), the outer race ring unit (40) defining a reference axis (100) of the hub assembly (10) and having a first axial end (41) bearing against a shoulder (36) of the inner wall (20) of the hub housing (14) inside the through cavity (22),
**characterised in that** it further comprises a semi-flexible open spacer ring (42) radially elastically retained against the inner wall (20) in the through cavity (22), the semi-flexible open spacer ring (42) having an inner axial end (44) bearing against a second axial end (46) of the outer race ring unit (40) opposite the first axial end (41) and an outer axial end (48) which is flush with, or protrudes from, a planar face (24) of the mounting flange (18).

2. The hub assembly of claim 1, wherein the inner wall (20) has a cylindrical portion (34), the outer race ring unit (40) is press-fitted into the cylindrical portion (34) of the inner wall (20) and the semi-flexible open spacer ring (42) is radially elastically retained against the cylindrical portion (34) of the inner wall (20).

3. The hub assembly of any one of the preceding claims, wherein the semi-flexible open spacer ring (42) has a cylindrical outer face in contact with the inner wall (20) of the hub housing (14).

4. The hub assembly of claim 3, wherein the semi-flexible open spacer ring (42) has quadrangular cross-section.

5. The hub assembly of any one of the preceding claims, wherein the mounting flange (18) has one or more through holes (26) parallel to the reference axis (100).

6. The hub assembly of any one of the preceding claims, wherein the mounting flange (18) is provided with an annular groove (30) opened axially for receiving an annular seal (32).

7. The hub assembly of any one of the preceding claims, further comprising an inner race ring unit (50) comprising one or more inner race rings (51), and one or more rows of rolling bodies (52) between the inner race ring unit (50) and the outer race ring unit (40), for guiding a rotation movement of the outer race ring unit (40) relative to the inner race ring unit (50) about the reference axis (100) of the hub assembly (10).

8. An agricultural implement assembly comprising the hub assembly (10) of any one of the preceding claims and an agricultural rotary implement (12), in particular a disc harrow, fixed to the flange (18) of the hub housing (14), wherein the rotary implement (12) bears axially against the outer end (48) of the semi-flexible open spacer ring (42).

9. The agricultural implement assembly of claim 8 wherein the hub assembly (10) is according to claim 7, further comprising a support pin (56) having an inner section (54) inside the through cavity (22) of the hub housing (14) and a protruding section (60) that protrudes axially outside the hub housing (14) in a direction opposite the planar face (24), wherein the inner race ring unit (50) is press-fitted onto the inner section (54) of the support pin (56) and bears axially against a shoulder (58) of the support pin (56) at one end of the inner section (54) of the support pin (56) opposite the protruding section (60).

10. The agricultural implement assembly of claim 9, further comprising a support arm (64) to which the support pin (56) is fastened.

11. The agricultural implement assembly of claim 10, wherein the support arm (64) bears axially directly or indirectly against the inner race ring unit (50).

12. The agricultural implement assembly of claim 10 or claim 11, wherein the protruding section (60) of the support pin (56) extends through a through hole (62) of the support arm (64).

13. The agricultural implement assembly of claim 12, further comprising a nut (66) screwed onto a threaded end of the protruding end section (60) of the support pin (56).

14. The agricultural implement assembly of any one of claims 10 to 13, wherein the support arm (64) is part of a harrow frame.

## Patentansprüche

1. Eine Nabenanordnung (10) für ein landwirtschaftliches Werkzeug (12), bestehend aus:
- einem Nabengehäuse (14) mit einer Außenwand (16), die einen Befestigungsflansch (18) definiert, und einer Innenwand (20), die einen durchgehenden Hohlraum (22) definiert;
- einer äußeren Laufringeinheit (40), die einen oder mehrere äußere Laufringe umfasst, die in den durchgehenden Hohlraum (22) eingepresst sind, wobei die äußere Laufringeinheit (40) eine Bezugsachse (100) der Nabenanordnung (10) definiert und ein erstes axiales Ende (41) aufweist, das an einer Schulter (36) der Innenwand (20) des Nabengehäuses (14) innerhalb des durchgehenden Hohlraums (22) anliegt,
**dadurch gekennzeichnet, dass** es ferner einen halbflexiblen offenen Distanzring (42) umfasst, der radial elastisch gegen die Innenwand (20) in dem durchgehenden Hohlraum (22) gehalten ist, wobei der halbflexible offene Distanzring (42) ein inneres axiales Ende (44), das sich an einem zweiten axialen Ende (46) der äußeren Laufringeinheit (40) gegenüber dem ersten axialen Ende (41) befindet, und ein äußeres axiales Ende (48) aufweist, das mit einer ebenen Fläche (24) des Montageflansches (18) bündig ist oder aus dieser herausragt.

2. Nabenanordnung nach Anspruch 1, wobei die Innenwand (20) einen zylindrischen Abschnitt (34) aufweist, wobei die äußere Laufringeinheit (40) in den zylindrischen Abschnitt (34) der Innenwand (20) eingepresst ist und der halbflexible offene Distanzring (42) radial elastisch gegen den zylindrischen Abschnitt (34) der Innenwand (20) gehalten wird.

3. Nabenanordnung nach einem der vorherstehenden Ansprüche, wobei der halbflexible offene Distanzring (42) eine zylindrische Außenfläche aufweist, die mit der Innenwand (20) des Nabengehäuses (14) in Kontakt steht.

4. Nabenanordnung nach Anspruch 3, wobei der halbflexible offene Distanzring (42) einen viereckigen Querschnitt aufweist.

5. Nabenanordnung nach einem der vorherstehenden Ansprüche, bei der der Montageflansch (18) ein oder mehrere Durchgangslöcher (26) parallel zur Bezugsachse (100) aufweist.

6. Nabenanordnung nach einem der vorstehenden Ansprüche, wobei der Montageflansch (18) mit einer ringförmigen Nut (30) versehen ist, die zur Aufnahme einer ringförmigen Dichtung (32) axial geöffnet ist.

7. Nabenanordnung nach einem der vorstehenden Ansprüche, ferner umfassend eine innere Laufringeinheit (50), die einen oder mehrere innere Laufringe (51) und einen oder mehrere Reihen von Walzkörpern (52) zwischen dem inneren Laufring (50) und der äußeren Laufringeinheit (40) zum Führen einer Drehbewegung der äußeren Laufringeinheit (40) relativ zur inneren Laufringeinheit (50) um die Bezugsachse (100) der Nabenanordnung (10) aufweist.

8. Landwirtschaftliche Werkzeugordnung, welche die Nabenanordnung (10) nach einem der vorstehenden Ansprüche und ein landwirtschaftliches Drehwerkzeug (12) umfasst, insbesondere eine Scheibenegge, die an dem Flansch (18) des Nabengehäuses (14) befestigt ist, wobei das Drehwerkzeug (12) axial gegen das äußere Ende (48) des halbflexiblen offenen Distanzrings (42) anliegt.

9. Landwirtschaftliche Werkzeugordnung nach Anspruch 8, wobei die Nabenanordnung (10) Anspruch 7 entspricht und einen Stützstift (56) mit einem inneren Abschnitt (54) innerhalb des Durchgangshohlraums (22) des Nabengehäuses (14) und einen vorspringenden Abschnitt (60) umfasst, der axial außerhalb des Nabengehäuses (14) in einer der ebenen Fläche (24) gegenüberliegenden Richtung vorsteht, wobei die innere Laufringeinheit (50) auf den inneren Abschnitt (54) des Stützstifts (56) und axial gegen einen Absatz (58) des Stützstiftes (56) an einem Ende des inneren Abschnitts (54) des Stützstiftes (56) gegenüber dem vorstehenden Abschnitt (60) anliegt.

10. Landwirtschaftliche Werkzeugordnung nach Anspruch 9, ferner umfassend einen Stützarm (64), an dem der Stützstift (56) befestigt ist.

11. Landwirtschaftliche Werkzeugordnung nach Anspruch 10, wobei der Tragarm (64) axial oder mittelbar an der inneren Laufringeinheit (50) anliegt.

12. Landwirtschaftliche Werkzeugordnung nach Anspruch 10 oder 11, wobei der vorstehende Abschnitt (60) des Stützstiftes (56) sich durch ein Durchgangsloch (62) des Stützarms (64) erstreckt.

13. Landwirtschaftliche Werkzeugordnung nach Anspruch 12, ferner umfassend eine Mutter (66), die auf ein Gewindeende des vorstehenden Endabschnitts (60) des Stützstiftes (56) geschraubt ist.

14. Landwirtschaftliche Werkzeugordnung nach einem der Ansprüche 10 bis 13, wobei der Tragarm (64) Teil eines Eggenrahmens ist.

## Revendications

1. Ensemble de moyeu (10) pour un outil agricole (12), comprenant :
- un carter de moyeu (14) possédant une paroi externe (16) définissant une bride de montage (18) et une paroi interne (20) définissant une cavité traversante (22) ;
- une unité de bague de roulement extérieure (40) comprenant une ou plusieurs bague(s) de roulement extérieure(s) frettée(s) dans la cavité traversante (22), ladite unité de bague de roulement extérieure (40) définissant un axe de référence (100) de l'ensemble de moyeu (10) et ayant une première extrémité axiale (41) qui appuie contre un épaulement (36) de la paroi interne (20) du carter de moyeu (14) à l'intérieur de la cavité traversante (22),
**caractérisé en ce qu'**il comprend en outre une bague d'écartement ouverte semi-flexible (42) retenue radialement de manière élastique contre la paroi interne (20) dans la cavité traversante (22), ladite bague d'écartement ouverte semi-flexible (42) ayant une extrémité axiale interne (44) qui appuie contre une seconde extrémité axiale (46) de l'unité de bague de roulement extérieure (40) opposée à la première extrémité axiale (41) et une extrémité axiale externe (48) qui affleure, ou qui fait saillie depuis, une face plane (24) de la bride de montage (18).

2. Ensemble de moyeu selon la revendication 1, dans lequel la paroi interne (20) possède une portion cylindrique (34), l'unité de bague de roulement extérieure (40) est frettée dans la portion cylindrique (34) de la paroi interne (20) et la bague d'écartement ouverte semi-flexible (42) est maintenue radialement, de manière élastique, contre la portion cylindrique (34) de la paroi interne (20).

3. Ensemble de moyeu selon l'une quelconque des revendications précédentes, dans lequel la bague d'écartement ouverte semi-flexible (42) possède une face externe cylindrique en contact avec la paroi interne (20) du carter de moyeu (14).

4. Ensemble de moyeu selon la revendication 3, dans lequel la bague d'écartement ouverte semi-flexible (42) possède une section quadrangulaire.

5. Ensemble de moyeu selon l'une quelconque des revendications précédentes, dans lequel la bride de montage (18) présente un ou plusieurs trou (s) traversant (s) (26) parallèle(s) à l'axe de référence (100).

6. Ensemble de moyeu selon l'une quelconque des revendications précédentes, dans lequel la bride de montage (18) est munie d'une gorge annulaire (30) ouverte axialement pour recevoir un joint annulaire (32).

7. Ensemble de moyeu selon l'une quelconque des revendications précédentes, comprenant en outre une unité de bague de roulement intérieure (50) comprenant une ou plusieurs bague(s) de roulement intérieure(s) (51), et une ou plusieurs rangée(s) de corps de roulement (52) entre l'unité de bague de roulement intérieure (50) et l'unité de bague de roulement extérieure (40), afin de guider un mouvement de rotation de l'unité de bague de roulement extérieure (40) par rapport à l'unité de bague de roulement intérieure (50) autour de l'axe de référence (100) de l'ensemble de moyeu (10).

8. Ensemble d'outil agricole comprenant l'ensemble de moyeu (10) selon l'une quelconque des revendications précédentes et un outil agricole rotatif (12), en particulier une herse à disque, fixé sur la bride (18) du carter de moyeu (14), dans lequel l'outil rotatif (12) appuie axialement contre l'extrémité externe (48) de la bague d'écartement ouverte semi-flexible (42).

9. Ensemble d'outil agricole selon la revendication 8, dans lequel l'ensemble de moyeu (10) est selon la revendication 7, comprenant en outre une goupille de fixation (56) possédant une section interne (54) à l'intérieur de la cavité traversante (22) du carter de moyeu (14) et une section en saillie (60) qui fait saillie axialement à l'extérieur du carter de moyeu (14) dans une direction opposée à la face plane (24), dans lequel l'unité de bague de roulement intérieure (50) est frettée sur la section interne (54) de la goupille de fixation (56) et appuie axialement contre un épaulement (58) de la goupille de fixation (56) à une extrémité de la section interne (54) de la goupille de fixation (56) opposée à la section en saillie (60).

10. Ensemble d'outil agricole selon la revendication 9, comprenant en outre un bras de support (64) sur lequel est fixée la goupille de fixation (56).

11. Ensemble d'outil agricole selon la revendication 10, dans lequel le bras de support (64) appuie axialement, directement ou indirectement, contre l'unité de bague de roulement intérieure (50).

12. Ensemble d'outil agricole selon la revendication 10 ou la revendication 11, dans lequel la section en saillie (60) de la goupille de fixation (56) s'étend à travers un trou traversant (62) du bras de support (64).

13. Ensemble d'outil agricole selon la revendication 12, comprenant en outre un écrou (66) vissé sur une extrémité filetée de la section d'extrémité en saillie (60) de la goupille de fixation (56).

14. Ensemble d'outil agricole selon l'une quelconque des revendications 10 à 13, dans lequel le bras de support (64) fait partie d'un cadre de herse.
